# EUROPÄISCHE PATENTSCHRIFT

(11) **EP 3 443 381 B1**
(45) Veröffentlichungstag und Bekanntmachung des Hinweises auf die Patenterteilung: **25.12.2019**
(21) Anmeldenummer: 17704375.9
(22) Anmeldetag: 03.02.2017
(51) Int. Cl.: G01C 7/02, G01S 7/481, G01S 15/42, G01S 17/42, G01S 7/02, G01S 17/87, G01S 17/89, G01S 7/48, G01S 7/497, G01S 15/08, G01S 17/02, G01S 13/88

(54) **LASERSCANNER**
LASER SCANNER
SCANNER LASER

(30) Priorität: 15.04.2016 AT 503342016
(43) Veröffentlichungstag der Anmeldung: 20.02.2019
(73) Patentinhaber: Riegl Laser Measurement Systems GmbH, 3580 Horn (AT)
(72) Erfinder: RIEGER, Peter, 3824 Grossau (AT); ULLRICH, Andreas, 3003 Gablitz (AT)
(74) Vertreter: Weiser & Voith Patentanwälte Partnerschaft
(86) Internationale Anmeldenummer: PCT/AT2017/060015
(87) Internationale Veröffentlichungsnummer: WO 2017/177246

(56) Entgegenhaltungen:
- EP-A2- 2 293 013
- WO-A1-2016/138585
- GB-A- 2 341 026
- US-A1- 2009 122 295
- US-A1- 2009 185 741

## Beschreibung

Die vorliegende Erfindung betrifft einen Laserscanner zum Scannen eines Grundes von einem see- oder luftgestützten Fahrzeug aus, mit einer Scaneinheit zum Aussenden eines um eine Scanachse aufgefächerten Scanfächers aus Laserstrahlen und Empfangen der vom Grund reflektierten Laserstrahlen und einer an die Scaneinheit angeschlossenen Auswerteeinheit zur Auswertung der empfangenen Laserstrahlen.

Aus dem Stand der Technik, z.B. aus der US 2009/0122295 A1, ist bekannt, einen derartigen Laserscanner an einem Flugzeug oder Schiff anzubringen, um den darunterliegenden Grund beim Überfliegen bzw. Überfahren in längs der Flugbahn bzw. des Wasserfahrwegs verlaufenden Scanstreifen zu scannen. Die Streifenbreite der Scanstreifen hängt dabei vom Öffnungswinkel des Scanfächers ab, d.h. dem Fächerwinkel, welcher meist durch eine die Laserstrahlen einer einzigen Laserquelle auffächernde Optik, z.B. einen schwingenden Spiegel oder ein sich kontinuierlich drehendes Polygonspiegelrad, festgelegt ist. Alternativ können auch mehrere Laserquellen als Scanfächer ausgerichtet sein. Auf diese Weise wird der überflogene bzw. überfahrene Grund innerhalb jedes Scanstreifens zeilenweise gescannt.

Als Laserstrahlen kommen beispielsweise modulierte oder gepulste Laserstrahlen zum Einsatz. Aus der Laufzeit jedes Laserstrahls vom Aussenden bis zum Empfangen seiner Reflexion vom Grund sowie aus der Aussenderichtung wird ein Abstand des Grundes vom Laserscanner in Aussenderichtung errechnet und aus der Vielzahl von Laserstrahl-Messungen ein dreidimensionales Geländemodell des Grundes ermittelt. Um ein Geländemodell größerer Fläche zu errechnen, wird der Grund mehrfach in nebeneinanderliegenden Bahnen überflogen bzw. überfahren und die so gescannten nebeneinanderliegenden Scanstreifen hinterher rechnerisch zusammengefügt.

Variiert beim Scannen die Höhe des Fahrzeugs über Grund z.B. infolge des Geländeverlaufs des Grundes, so ändern sich bei gegebenem Fächerwinkel die Breite des Scanstreifens und zugleich die Scanauflösung entsprechend. Da eine Veränderung des Scanfächerwinkels je nach verwendetem Laserscanner schwierig oder sogar unmöglich ist, sind nach dem Stand der Technik eine komplizierte Flugbahn bzw. Fahrstrecke des Scanfahrzeugs und/oder überhaupt ein Mehrfach-Scannen erforderlich, um die gewünschte Scanauflösung und -abdeckung zu erreichen; daraus resultieren oft erhebliche Überlappungsbereiche benachbarter bzw. einander querender Scanstreifen, was an den Grenzen jedes Überlappungsbereichs eine sprunghafte Änderung der Scanauflösung und insgesamt eine ungleichmäßige Scanauflösung und einen hohen Scanaufwand zur Folge hat.

Die Erfindung setzt sich zum Ziel, einen Laserscanner zu schaffen, welcher diese Nachteile überwindet und insbesondere ein Laserscannen von einem see- oder luftgestützten Fahrzeug aus mit einer gleichmäßigen, guten Scanauflösung und -abdeckung bei einfacher Streckenwahl des Scanfahrzeugs ermöglicht.

Dieses Ziel wird mit einem Laserscanner der einleitend genannten Art erreicht, der gemäß der Erfindung umfasst:
eine Messeinheit, welche dafür ausgebildet ist, die Höhe des Fahrzeugs über Grund zu messen, und
eine am Fahrzeug verankerbare, an die Messeinheit angeschlossene Stelleinrichtung,
wobei die Stelleinrichtung dafür ausgebildet ist, den Scanfächer der Scaneinheit gegenüber dem Fahrzeug um eine von der Scanachse verschiedene erste Stellachse in Abhängigkeit von der gemessenen Höhe über Grund zu verdrehen.

Auf diese Weise bleibt - bei konstantem Fächerwinkel des Scanfächers - durch die geeignete Verdrehung des Scanfächers gegenüber dem Fahrzeug um die erste Stellachse die Streifenbreite des Scanstreifens konstant und die Scanauflösung zumindest annähend unverändert, auch wenn sich die Höhe des (Luft-)Fahrzeugs über Grund bzw. umgekehrt die Tiefe des Grundes unter dem (Wasser-)Fahrzeug während des Laserscannens verändert. Dies ergibt bei vorgegebener Scanauflösung einen wesentlich höheren Flächenertrag beim Scannen, d.h. eine größere gescannte Fläche pro Zeiteinheit. Mehrfach-Scannen und/oder Überlappungen benachbarter Scanstreifen können so entfallen, und es können sehr einfache, geradlinige Flug- bzw. Wasserfahrstrecken gewählt werden, welche dennoch den gesamten zu scannenden Grund mit weitgehend gleichmäßiger Scanauflösung abdecken. Beispielsweise wird die Verdrehung des Scanfächers so gewählt, dass beim Laserscannen in niedrigster Höhe über Grund der Scanfächer etwa quer zur Bewegungsrichtung des Fahrzeugs steht.

Besonders wirksam ist das Verdrehen des Scanfächers, wenn die erste Stellachse im Wesentlichen vertikal ist. Ferner ist es günstig, wenn die erste Stellachse die Scanachse im Ursprung des Scanfächers schneidet. In diesem Fall wird der Ursprung des Scanfächers auch bei dessen Verdrehen um die erste Stellachse nicht verschoben, wogegen andernfalls die resultierende Verschiebung beim Errechnen des Geländemodells zusätzlich zu berücksichtigen ist.

Für den Aufbau der Messeinheit sind unterschiedliche Ausführungsformen und Varianten möglich.

Gemäß einer ersten, besonders einfachen Ausführungsform ist die Messeinheit dafür ausgebildet, die Höhe des Fahrzeugs über Grund durch Laufzeitmessung eines ausgesendeten, vom Grund reflektierten und empfangenen Messstrahls zu messen. Dabei ist keinerlei Vorabkenntnis des Grundes bzw. seines Verlaufs erforderlich.

Dazu kann in einer Variante eine separate Messeinheit vorgesehen werden, wobei der Messstrahl ein Radar-, Laser- oder Sonarmessstrahl ist. Radar-, Laser-, oder Sonar-Entfernungsmessgeräte sind für eine Vielzahl von Anwendungsfällen bekannt und erprobt, sodass ein entsprechendes, die konkreten Erfordernisse erfüllendes Gerät im Laserscanner wirksam eingesetzt werden kann.

In einer anderen Variante ist der Messstrahl einer der von der Scaneinheit ausgesendeten und vom Grund reflektierten empfangenen Laserstrahlen, bevorzugt ein vertikal ausgesendeter Laserstrahl. Damit wird die Scaneinheit selbst als Teil der Messeinheit zur Messung der Höhe des Fahrzeugs über Grund verwendet; ein zusätzliches, separates Gerät entfällt.

Gemäß einer zweiten Ausführungsform der Erfindung umfasst die Messeinheit einen Satellitennavigationsempfänger zum Messen der dreidimensionalen Position und ist dafür ausgebildet, mithilfe der vom Satellitennavigationsempfänger gemessenen Position und eines gespeicherten Geländemodells des Grundes unterhalb des Fahrzeugs die Höhe des Fahrzeugs über Grund zu messen. Derartige Satellitennavigationsempfänger sind beim Scannen eines Grundes vom see- oder luftgestützten Fahrzeug aus meist vorhanden, um Bezugspunkte für das Scannen zu schaffen. Deshalb ist auch diese Ausführungsform der Messeinheit ohne besondere Zusatzgeräte realisierbar und kann - bei Verwendung eines entsprechend präzisen Satellitennavigationsempfängers und eines bereits ausreichend detaillierten Geländemodells - auch bei hohen Anforderungen an die Genauigkeit der gemessenen Höhe eingesetzt werden.

In einer besonders rechenleistungssparenden Variante dieser Ausführungsform ist das genannte Geländemodell des Grundes vorgegeben und in einem Speicher des Laserscanners hinterlegt. In den meisten Fällen ist zumindest der grobe Verlauf des Grundes, d.h. ein zumindest grobes Geländemodell, ohnehin verfügbar, z.B. weil ein solches für die Planung des Scannens verwendet wurde. Bereits ein solches grobes Geländemodell, auch in bloß tabellarischer oder vektorisierter Form, kann für das hier erforderliche Messen der Höhe des Fahrzeugs über Grund ausreichend sein. Das gespeicherte Geländemodell kann dann ohne hohen Rechenaufwand im Laserscanner verwendet werden.

Eine weitere besonders vorteilhafte Variante dieser Ausführungsform von Messeinheit ergibt sich, wenn das von der Auswerteeinheit des Laserscanners selbst erstellte Geländemodell zur Ermittlung der Höhe über Grund herangezogen wird. In diesem Fall ist die Auswerteeinheit also dafür ausgebildet, aus Aussenderichtung und Laufzeit der Laserstrahlen das genannte Geländemodell des Grundes zu errechnen und in einem Speicher zu hinterlegen; die Messeinheit hat auf diesen Speicher Zugriff. Auf diese Weise wird die Höhe des Fahrzeugs über Grund einerseits hochpräzise gemessen, was sogar in Echtzeit und, wenn zur Genauigkeitserhöhung gewünscht, unter zusätzlicher Interpolation bzw. Extrapolation der Messwerte erfolgen kann, und andererseits ist kein gesondertes vorgespeichertes Geländemodell erforderlich.

In jeder der genannten Ausführungsformen der Erfindung kann die Stelleinrichtung ferner dafür ausgebildet sein, mithilfe des Geländemodells auch ein Gefälle des Grundes unterhalb der gemessenen Position und quer zu einer Bewegungsrichtung des Fahrzeugs zu ermitteln und den Scanfächer der Scaneinheit gegenüber dem Fahrzeug um eine im Wesentlichen in Bewegungsrichtung liegende, von der ersten verschiedene zweite Stellachse in Abhängigkeit von dem ermittelten Gefälle zu verdrehen. Dadurch kann auch ein Gefälle des Grundes quer zur Flug- bzw. Fahrrichtung berücksichtigt werden, um durch geeignete Verdrehung um die zweite Stellachse einen geraden Verlauf des Scanstreifens mit gleichbleibender Streifenbreite über den gesamten Flug- bzw. Wasserfahrweg zu erzielen.

Gemäß einer weiteren, vorteilhaften Ausgestaltung hat der Laserscanner eine Trägheitsmesseinrichtung zum Ermitteln zumindest einer der Werte Nick-, Roll- und Gierwinkel, wobei die Stelleinrichtung an die Trägheitsmesseinrichtung angeschlossen und dafür ausgebildet ist, den Scanfächer ferner zur Kompensation des/der ermittelten Nick-, Roll- und/oder Gierwinkel(s) zu verdrehen. So können Abweichungen des Fahrzeugs von der Horizontallage und der Bewegungsrichtung, z.B. infolge von Turbulenzen oder Seitenwind bzw. Wellengang oder Strömungen, in einer, zwei oder allen drei Raumrichtungen ausgeglichen werden.

Die Stelleinrichtung kann in unterschiedlicher Weise ausgeführt sein. So ist gemäß einer ersten vorteilhaften Ausführungsform die Stelleinrichtung dafür ausgebildet, den Scanfächer der Scaneinheit durch Verstellen eines Umlenkspiegels der Scaneinheit gegenüber dem Fahrzeug zu verdrehen. Die Stelleinrichtung bewegt dadurch nur die geringe Masse des Umlenkspiegels und kann somit klein und sehr dynamisch ausgebildet sein. Der Umlenkspiegel kann einerseits ein separater Spiegel der Scaneinheit sein oder andererseits ein beispielsweise ohnehin vorhandenes rotierendes Polygonspiegelrad, welches die Stelleinrichtung in seiner Lage und/oder in der Ausrichtung seiner Drehachse verstellt.

In einer dazu alternativen zweiten Ausführungsform ist die Stelleinrichtung dafür ausgebildet, die gesamte Scaneinheit gegenüber dem Fahrzeug zu verdrehen. In dieser Variante greift die Stelleinrichtung nicht in den Laserstrahlenverlauf der Scaneinheit ein, sondern trägt diese z.B. an einem Flansch oder in einem Halterahmen. Dies vereinfacht die Verwendung einer in sich abgeschlossenen Scaneinheit, welche erforderlichenfalls gegen eine andere Scaneinheit, z.B. mit anderem Scanfächerwinkel, rasch und einfach ausgetauscht werden kann.

Besonders günstig ist es dabei, wenn die Stelleinrichtung eine Steuereinheit und einen von der Steuereinheit gesteuerten Aktuator zum Verdrehen des Scanfächers der Scaneinheit gegenüber dem Fahrzeug umfasst. Steuereinheit und Aktuator können in diesem Fall flexibler separat ausgeführt werden, sodass beispielsweise die Steuereinheit auch als ein Teil der Auswerteeinheit ausgeführt werden kann. In letzterem Fall wird die erforderliche Rechenleistung in einer einzigen Einheit, der Auswerteeinheit, gebündelt; eine Duplikation von Rechenleistung entfällt, sodass der Laserscanner insgesamt kompakter und kostengünstiger aufgebaut werden kann.

Die Erfindung wird nachfolgend anhand von in den beigeschlossenen Zeichnungen dargestellten Ausführungsbeispielen näher erläutert. In den Zeichnungen zeigen:
Fig. 1 ein Flugzeug mit einem Laserscanner gemäß dem Stand der Technik beim Scannen eines Grundes in einer Schrägansicht;
Fig. 2 ein Blockschaltbild eines Laserscanners gemäß der vorliegenden Erfindung;
Fig. 3 ein Flugzeug mit dem Laserscanner von Fig. 2 beim Scannen des Grundes von Fig. 1 in einer Schrägansicht;
die Fig. 4a bis 4c den Laserscanner von Fig. 2 beim Scannen gemäß Fig. 3 in einer Seitenansicht (Fig. 4a), einer Rückansicht (Fig. 4b) und einer Draufsicht (Fig. 4c); und
die Fig. 5a und 5b den Laserscanner von Fig. 2 beim Scannen eines Grundes mit Gefälle quer zur Flugrichtung ohne (Fig. 5a) bzw. mit Gefälleausgleich (Fig. 5b), jeweils in einer Frontansicht.

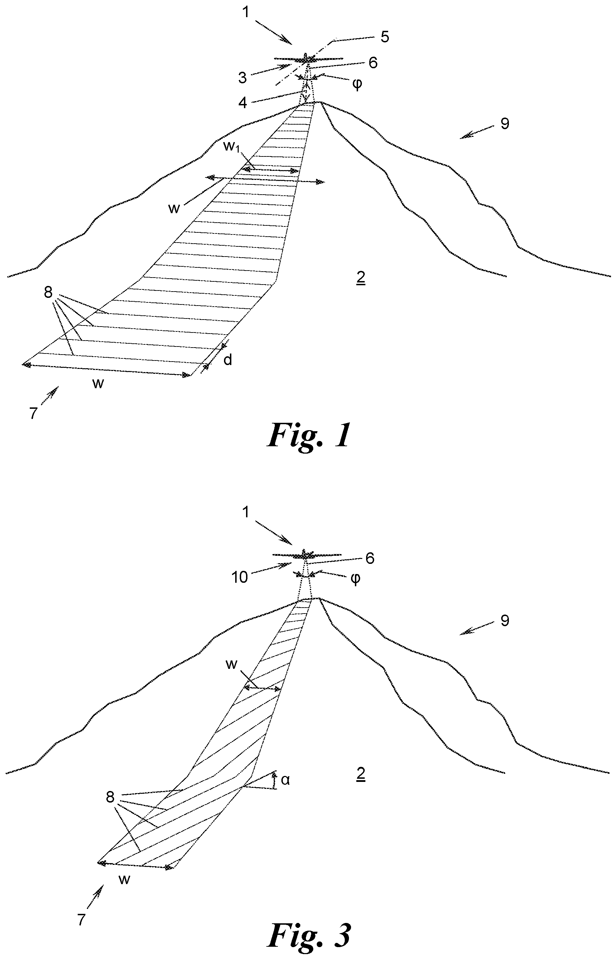

Gemäß Fig. 1 trägt ein see- oder luftgestütztes Fahrzeug 1, hier ein bemanntes Flugzeug 1, zum Scannen eines Grundes 2 einen nach unten gerichteten Laserscanner 3. Der Laserscanner 3 erzeugt dazu z.B. in einer einzigen Laserquelle gepulste oder modulierte Laserstrahlen 4, welche von einer schwingenden oder rotierenden Optik, z.B. einem sich kontinuierlich drehenden Polygonspiegelrad, um eine Scanachse 5 zu einem Scanfächer 6 mit Fächerwinkel ϕ aufgefächert werden. Alternativ kann der Laserscanner 3 über eine Vielzahl von Laserquellen verfügen, welche in ihrer Gesamtheit durch geeignete Ausrichtung um die Scanachse 5 den Scanfächer 6 bilden. Der Fächerwinkel ϕ ist somit durch den Aufbau des Laserscanners 3 vorgegeben und hat etwa die Form eines Kreis- oder Kegelmantelsektors.

Beim Scannen sendet der Laserscanner 3 die Laserstrahlen 4 auf den überflogenen Grund 2 aus und empfängt die vom Grund 2 reflektierten Laserstrahlen 4. Der Grund 2 unterhalb des Fahrzeugs 1 wird dazu zeilenweise in einem Scanstreifen 7 der Breite w mit gegenseitigem Abstand d der Zeilen 8 abgetastet ("gescannt") . Jede Zeile 8 stellt dabei das Auftreffen der Laserstrahlen 4 eines Scanfächers 6 auf dem Grund 2 dar; aus Aussenderichtung und Laufzeit der Laserstrahlen 4 der Vielzahl der Zeilen 8 wird ein dreidimensionales Geländemodell des Grundes 2 errechnet.

Der Abstand d der Zeilen 8 ergibt sich infolge der Fortbewegung des Flugzeugs 1 und der Scangeschwindigkeit; die Streifenbreite w ist abhängig vom Fächerwinkel ϕ und von der Höhe des Flugzeugs 1 über dem Grund 2 ("above ground level", AGL).

Umfasst der Grund 2 somit wie im Beispiel von Fig. 1 einen Berg 9, muss nach dem Stand der Technik die sich beim Überfliegen des Berges 9 ändernde Streifenbreite w - siehe beispielhaft die geringere Streifenbreite w₁ am Berg 9 im Vergleich zur Streifenbreite w im Tal - z.B. durch geeignete Wahl der Flugbahn bzw. Mehrfachüberfliegen ausgeglichen werden, um beim Scannen Lücken zwischen benachbarten Scanstreifen 7 zu verhindern. Dabei kommt es zu Überlappungen benachbarter oder einander querender Scanstreifen 7 und in der Folge zu sprunghaften Änderungen der Scanauflösung an den Grenzen der Überlappungsbereiche und einer ungleichmäßigen Verteilung der Scanauflösung über den Grund 2.

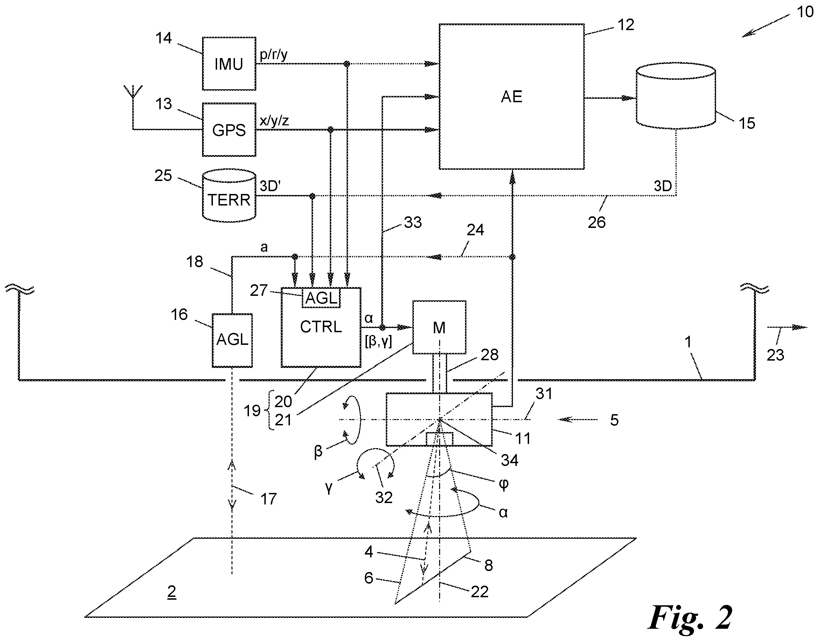

Anhand der in den Fig. 2 bis 5 gezeigten Beispiele werden im Folgenden verschiedene Ausführungsformen eines erfindungsgemäßen Laserscanners 10 beschrieben, welcher ein gleichmäßiges Scannen des Grundes 2 ermöglicht. Gleiche Bezugszeichen bezeichnen dabei gleiche Teile wie in Fig. 1.

Gemäß Fig. 2 umfasst der Laserscanner 10 eine Scaneinheit 11, welche - vergleichbar mit dem Laserscanner 3 gemäß Fig. 1 - den um die Scanachse 5 aufgefächerten Scanfächer 6 aus Laserstrahlen 4 aussendet und die vom Grund 2 reflektierten Laserstrahlen 4 empfängt. Die empfangenen Laserstrahlen 4 werden von einer an die Scaneinheit 11 angeschlossenen Auswerteeinheit 12 ausgewertet. Im einfachsten Fall zeichnet die Auswerteinheit 12 dazu Aussenderichtung und Laufzeit der Laserstrahlen 4 und ferner Positionswerte x/y/z, welche beispielsweise ein Satellitennavigationsempfänger 13 des Laserscanners 10 erzeugt, sowie erforderlichenfalls Nickwinkel ("pitch") p, Rollwinkel ("roll") r und Gierwinkel ("yaw") y des Fahrzeugs 1 aus einer Trägheitsmesseinrichtung (inertial measurement unit, IMU) 14 des Laserscanners 10 in einem angeschlossenen Speicher 15 auf. Der Speicher 15 kann nach dem Scannen ausgelesen und aus den aufgezeichneten Werten - d.h. "offline" - ein dreidimensionales Geländemodell 3D errechnet werden; optional kann die Auswerteeinheit 12 gleich selbst - somit "online" - das Geländemodell 3D errechnen und im Speicher 15 aufzeichnen.

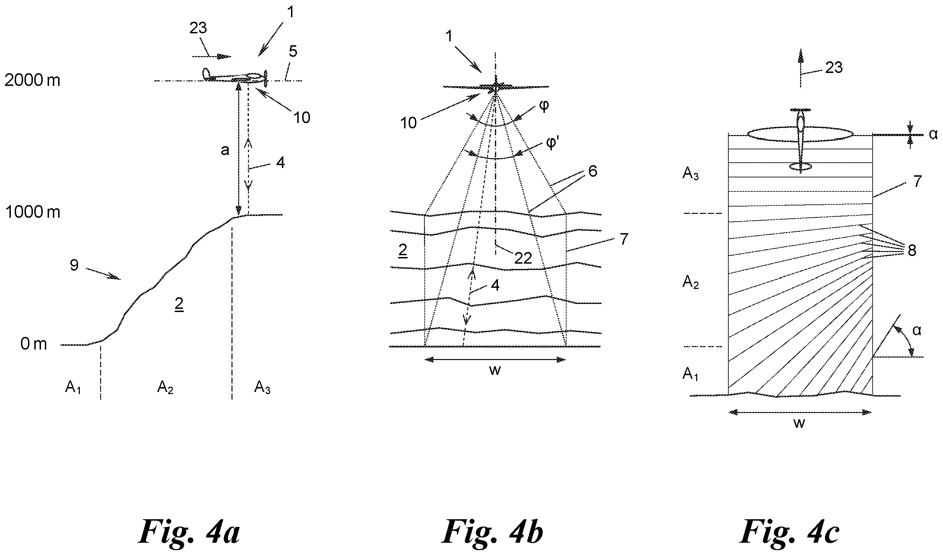

Wie in Fig. 2 gezeigt, umfasst der Laserscanner 10 eine Messeinheit 16, welche die Höhe a des Fahrzeugs 1 über dem Grund 2 misst. Die Messeinheit 16 kann dazu jedes in der Technik bekannte Messprinzip verwenden, z.B. ein photogrammetrisches Entfernungsbestimmungsverfahren. Im gezeigten Beispiel sendet die Messeinheit 16 einen Messstrahl 17, z.B. einen Radar-, Laser- oder Sonarmessstrahl, bevorzugt senkrecht nach unten aus und misst ihre Höhe a (Fig. 4a) - und somit jene des Laserscanners 10 bzw. des Fahrzeugs 1 - über Grund 2 durch Laufzeitmessung des vom Grund 2 reflektierten und empfangenen Messstrahls 17. Über eine Leitung 18 übermittelt die Messeinheit 16 den Wert der gemessenen Höhe a an eine Stelleinrichtung 19.

Die Stelleinrichtung 19 umfasst eine Steuereinheit 20 und einen von dieser gesteuerten Aktuator 21. Die Stelleinrichtung 19 bzw. ihr Aktuator 21 ist am Fahrzeug 1 gegenüber diesem bewegungsstarr verankert. Die Steuereinheit 20 kann optional ein Teil der Auswerteeinheit 12 sein.

Die Stelleinrichtung 19 empfängt die von der Messeinheit 16 gemessene Höhe a über Grund und verdreht nun in Abhängigkeit von dieser Höhe a den Scanfächer 6 der Scaneinheit 11 gegenüber dem Fahrzeug 1 um eine von der Scanachse 5 verschiedene erste Stellachse 22 um einen ersten Stellwinkel α, d.h. α = f(a). Im Beispiel von Fig. 2 ist die erste Stellachse 22 im Wesentlichen vertikal.

Die Wirkung dieses Verdrehens veranschaulicht Fig. 3: Durch geeignetes Verdrehen des Scanfächers 6 um die erste Stellachse 22 in Abhängigkeit von der Höhe a bleibt die Streifenbreite w des Scanstreifens 7 auch beim Überfliegen des Berges 9 konstant. Dadurch wird kann der Grund 2 mit einfachen, nebeneinanderliegenden Flugbahnen bzw. Fahrstrecken lückenlos und mit gleichmäßig guter Scanauflösung gescannt werden. Die dabei erzeugten Scanstreifen 7 konstanter Breite w können wesentlich einfacher zur effektiven Errechnung des Geländemodells 3D kombiniert werden, als dies beim Scannen desselben Grundes 2 mit dem Laserscanner 3 von Fig. 1 möglich ist.

Die Fig. 4a bis 4c zeigen das Beispiel von Fig. 3 im Detail. Der Grund 2 unterhalb des Flugzeugs 1 verläuft z.B. in einem ersten Bereich A₁ etwa auf Meeresniveau (0 m) und in einem anschließenden zweiten Bereich A₂ an dem Berg 9 aufwärts bis zu einem - höchstgelegenen - dritten Bereich A₃ auf 1000 m. Das Flugzeug 1 fliegt in Bewegungsrichtung 23 über allen Bereichen A₁ - A₃ konstant auf einer absoluten Höhe von z.B. 2000 m. Trotz gleichbleibenden Fächerwinkels ϕ und Veränderung der Höhe a über Grund bleibt die Streifenbreite w des Scanstreifens 7 in allen Bereichen A₁ - A₃ konstant (siehe die Fig. 4b und 4c), was auf die höhenabhängige Verdrehung des Scanfächers 6 um die erste Stellachse 22 zurückzuführen ist. In der Rückansicht von Fig. 4b verändert sich dabei die Projektion ϕ' des Fächerwinkels ϕ von einem kleineren Wert im ersten Bereich A₁ (α » 0, z.B. α = 60°) bis zum vollen Fächerwinkel ϕ bei der niedrigsten Höhe a über Grund im dritten Bereich A₃ (α = 0), ohne dass der tatsächliche Fächerwinkel ϕ jemals verändert zu werden braucht; die Draufsicht von Fig. 4c veranschaulicht dies. Im dritten Bereich A₃ (α = 0) ist die Scanachse 5 z.B. direkt in Bewegungsrichtung 23 des Flugzeugs 1 ausgerichtet.

Zurückkommend auf Fig. 2 kann die Messeinheit 16 nicht nur als gesonderte, autarke Einheit ausgebildet sein, sondern auch auf eine der folgenden alternativen Arten; gegebenenfalls könnte der Laserscanner 10 sogar über mehrere dieser Alternativen verfügen und die jeweils am besten geeignete zum Messen der Höhe a auswählen oder Messergebnisse mehrerer Alternativen kombinieren.

Gemäß einer dieser alternativen Varianten wird die Messeinheit durch die Scaneinheit 11 selbst gebildet, d.h. ihr Messstrahl ist einer der von der Scaneinheit 11 ausgesendeten und vom Grund reflektierten und empfangenen Laserstrahlen 4, bevorzugt ein vertikal nach unten ausgesendeter Laserstrahl 4. Die Steuereinheit 20 der Stelleinrichtung 19 kann diese Information der Scaneinheit 11 über eine Leitung 24 empfangen. Erforderlichenfalls kann ein Auswerten der Information z.B. durch die Auswerteeinheit 12 zwischengeschaltet werden, sodass in dieser Variante die Scaneinheit 11 - optional zusammen mit der Auswerteeinheit 12 - die Messeinheit bildet.

Gemäß einer weiteren alternativen Variante umfasst die Messeinheit den Satellitennavigationsempfänger 13, welcher seine dreidimensionale Position x/y/z - und somit die Position des Laserscanners 10 bzw. des Fahrzeugs 1 - misst. Mithilfe der vom Satellitennavigationsempfänger 13 gemessenen Position x/y/z und eines gespeicherten Geländemodells 3D' des Grundes 2 unterhalb des Fahrzeugs 1 wird sodann die Höhe a des Fahrzeugs 1 über Grund ermittelt.

Das dazu verwendete Geländemodell 3D' des Grundes 2 kann dabei einerseits fest vorgegeben und in einem Speicher 25 des Laserscanners 10 hinterlegt sein. Es kann sich z.B. um ein für die Planung des Scanvorgangs verwendetes Grobmodell des Grundes 2 handeln, wie es z.B. von Anbietern von Navigationskarten als Terrainmodell kommerziell erhältlich ist.

In dem weiter oben beschriebenen Fall, dass die Auswerteeinheit 12 beim Auswerten der empfangenen Laserstrahlen 4 selbst ("online") das Geländemodell 3D errechnet, kann andererseits dieses errechnete Geländemodell 3D als Geländemodell 3D' für die Ermittlung der Höhe a herangezogen werden, siehe Datenleitung 26.

Die zur Messung der Höhe a aus den Positionsdaten x/y/z des Satellitennavigationsempfängers 13 und dem Geländemodell 3D' erforderlichen Rechenschritte können dabei jeweils in einem eigenen Rechenblock 27 durchgeführt werden, welcher aber auch Teil der Steuereinheit 20 oder sogar der Auswerteeinheit 12 sein kann. Die Messeinheit wird in diesen Fällen also durch den Satellitennavigationsempfänger 13, den Speicher 25 bzw. 15 mit dem Geländemodell 3D' bzw. 3D und den Rechenblock 27 gebildet.

Wie in Fig. 2 gezeigt, kann die Stelleinrichtung 19 die gesamte Scaneinheit 11 an einem beweglichen Arm 28 tragen und gegenüber dem Fahrzeug 1 verdrehen. Alternativ ist die Scaneinheit 11 am Fahrzeug 1 oder einem Gehäuseteil des Laserscanners 10 gelenkig gelagert und wird von der Stelleinrichtung 19 bloß verdreht. Gemäß einer weiteren, alternativen Ausführungsform verdreht die Stelleinrichtung 19 den Scanfächer 6 der Scaneinheit 11 bloß durch Verstellen eines Umlenkspiegels der Scaneinheit 11 gegenüber dem Fahrzeug 1. Der Umlenkspiegel kann im Inneren oder außerhalb eines Gehäuses der Scaneinheit 11 liegen.

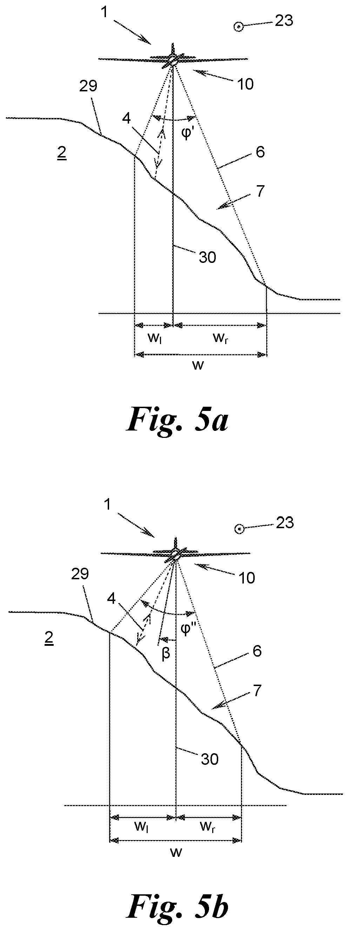

Die Fig. 5a und 5b zeigen eine weitere Verstellmöglichkeit des Laserscanners 10 bzw. seines Scanfächers 6 in Abhängigkeit vom Terrainverlauf des Grundes 2. Dabei überfliegt das Flugzeug 1 ein quer zur Bewegungsrichtung 23 des Flugzeugs 1 geneigtes Gefälle 29 des Grundes 2. Wie in Fig. 5a gezeigt, ergibt sich dadurch eine unsymmetrische Lage des Scanstreifens 7 bezüglich der Vertikalen 30 unter dem Flugzeug 1, siehe die Abschnitte wₗ und wᵣ des Scanstreifens 7, was diesen auch quer zur Bewegungsrichtung 23 versetzt.

Um dem entgegenzuwirken, ist die Stelleinrichtung 19 gemäß Fig. 5b dafür ausgebildet, mithilfe des Geländemodells 3D' das Gefälle 29 des Grundes 2 unterhalb der gemessenen Position x/y/z und quer zur Bewegungsrichtung 23 des Flugzeugs 1 zu ermitteln. Die Stelleinrichtung 19 verdreht daraufhin den Scanfächer 6 der Scaneinheit 11 gegenüber dem Flugzeug 1 um eine im Wesentlichen in Bewegungsrichtung 23 (normal zur Zeichnungsebene von Fig. 5) liegende zweite Stellachse 31 (Fig. 2) in Abhängigkeit vom ermittelten Gefälle 29 um einen zweiten Stellwinkel β, um den Scanstreifen 7 gegenüber der Vertikalen 30 zu zentrieren. Wie Fig. 2 zeigt, kann die zweite Stellachse 31 mit der Scanachse 5 zusammenfallen.

In einer weiteren optionalen Ausführungsform können die von der Trägheitsmesseinrichtung 14 des Laserscanners 10 gemessenen Nick-, Roll- und/oder Gierwinkel p, r und y des Flugzeugs 1 auch dazu genutzt werden, den Scanfächer 6 zur Kompensation zumindest eines dieser Winkel zu verdrehen. Die Verdrehung um die erste Stellachse 22 bzw. den Winkel α kann zur Kompensation des Gierwinkels y verwendet werden, jene um die zweite Stellachse 31 (Winkel β) zur Kompensation des Rollwinkels r und jene um eine dritte Stellachse 32 (Winkel γ) zur Kompensation des Nickwinkels p.

Es versteht sich, dass in jeder Ausführungsform die Stelleinrichtung 19 den bzw. die Stellwinkel α und, falls vorhanden, β und γ über eine entsprechende Leitung 33 an die Auswerteeinheit 12 übermittelt und die Auswerteeinheit 12 diese Winkel α, β, γ bei der Bestimmung der Aussenderichtungen der Laserstrahlen 4 mitberücksichtigt, um das Geländemodell 3D korrekt zu erstellen.

Zur einfacheren Berücksichtigung des Verdrehens des Scanfächers 6 in der Auswerteeinheit 12 können die erste Stellachse 22 und - falls gewünscht und vorhanden - ebenso die zweite und/oder die dritte Stellachse 31, 32 die Scanachse 5 am Ursprung 34 des Scanfächers 6 schneiden.

Der Laserscanner 10 kann von einem luftgestützen Fahrzeug 1 aus sowohl zum Scannen eines Geländes als auch eines Gewässerbodens verwendet werden. Zum Scannen eines Gewässerbodens kann der Laserscanner 10 auf einem geeigneten seegestützen Fahrzeug, d.h. einem Schiff oder Unterseeboot, in gleicher Weise eingesetzt werden. Optional ist das Fahrzeug 1 unbemannt, d.h. ein "unmanned aerial vehicle" (UAV), "unmanned surface vehicle" (USV) bzw. "unmanned underwater vehicle" (UUV).

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Laserscanner zum Scannen eines Grundes (2) von einem see- oder luftgestützten Fahrzeug (1) aus, umfassend
eine Scaneinheit (11) zum Aussenden eines um eine Scanachse (5) aufgefächerten Scanfächers (6) aus Laserstrahlen (4) und Empfangen der vom Grund (2) reflektierten Laserstrahlen (4), und
eine an die Scaneinheit (11) angeschlossene Auswerteeinheit (12) zur Auswertung der empfangenen Laserstrahlen (4),
**gekennzeichnet durch**
eine Messeinheit (16; 11; 13, 25, 27; 13, 15, 27), welche dafür ausgebildet ist, die Höhe (a) des Fahrzeugs (1) über Grund (2) zu messen, und
eine am Fahrzeug (1) verankerbare, an die Messeinheit (16; 11; 13, 25, 27; 13, 15, 27) angeschlossene Stelleinrichtung (19),
wobei die Stelleinrichtung (19) dafür ausgebildet ist, den Scanfächer (6) der Scaneinheit (11) gegenüber dem Fahrzeug (1) um eine von der Scanachse (5) verschiedene erste Stellachse (22) in Abhängigkeit von der gemessenen Höhe (a) über Grund (2) zu verdrehen.

2. Laserscanner nach Anspruch 1, **dadurch gekennzeichnet, dass** die erste Stellachse (22) im Wesentlichen vertikal ist.

3. Laserscanner nach Anspruch 1 oder 2, **dadurch gekennzeichnet, dass** die erste Stellachse (22) die Scanachse (5) am Ursprung (34) des Scanfächers (6) schneidet.

4. Laserscanner nach einem der Ansprüche 1 bis 3, **dadurch gekennzeichnet, dass** die Messeinheit (16; 11) dafür ausgebildet ist, die Höhe (a) des Fahrzeugs (1) über Grund (2) durch Laufzeitmessung eines ausgesendeten, vom Grund (2) reflektierten und empfangenen Messstrahls zu messen.

5. Laserscanner nach Anspruch 4, **dadurch gekennzeichnet, dass** der Messstrahl (17) ein Radar-, Laser- oder Sonarmessstrahl ist.

6. Laserscanner nach Anspruch 4, **dadurch gekennzeichnet, dass** der Messstrahl einer der von der Scaneinheit (11) ausgesendeten und vom Grund (2) reflektierten und empfangenen Laserstrahlen (4) ist, bevorzugt ein vertikal ausgesendeter Laserstrahl (4).

7. Laserscanner nach einem der Ansprüche 1 bis 3, **dadurch gekennzeichnet, dass** die Messeinheit (13, 25, 27; 13, 15, 27) einen Satellitennavigationsempfänger (13) zum Messen der dreidimensionalen Position (x/y/z) hat und dafür ausgebildet ist, mithilfe der vom Satellitennavigationsempfänger (13) gemessenen Position (x/y/z) und eines gespeicherten Geländemodells (3D, 3D') des Grundes (2) unterhalb des Fahrzeugs (1) die Höhe (a) des Fahrzeugs (1) über Grund (2) zu messen.

8. Laserscanner nach Anspruch 7, **dadurch gekennzeichnet, dass** das genannte Geländemodell (3D') des Grundes (2) vorgegeben und in einem Speicher (25) des Laserscanners (1) hinterlegt ist.

9. Laserscanner nach Anspruch 7, **dadurch gekennzeichnet, dass** die Auswerteeinheit (12) dafür ausgebildet ist, aus Richtung und Laufzeit der empfangenen Laserstrahlen (4) das genannte Geländemodell (3D) des Grundes (2) zu errechnen und in einem Speicher (15) zu hinterlegen, auf welchen die Messeinheit Zugriff hat.

10. Laserscanner nach einem der Ansprüche 7 bis 9, **dadurch gekennzeichnet, dass** die Stelleinrichtung (19) ferner dafür ausgebildet ist, mithilfe des Geländemodells (3D, 3D') ein Gefälle (29) des Grundes (2) unterhalb der gemessenen Position (x/y/z) und quer zu einer Bewegungsrichtung (23) des Fahrzeugs (1) zu ermitteln und den Scanfächer (6) der Scaneinheit (11) gegenüber dem Fahrzeug (1) um eine im Wesentlichen in Bewegungsrichtung (23) liegende, von der ersten verschiedene zweite Stellachse (31) in Abhängigkeit von dem ermittelten Gefälle (29) zu verdrehen.

11. Laserscanner nach einem der Ansprüche 1 bis 10, **gekennzeichnet durch** eine Trägheitsmesseinrichtung (14) zum Ermitteln zumindest einer der Werte Nick-, Roll- und Gierwinkel (p/r/y), wobei die Stelleinrichtung (19) an die Trägheitsmesseinrichtung (14) angeschlossen und dafür ausgebildet ist, den Scanfächer (6) ferner zur Kompensation des/der ermittelten Nick-, Roll- und/oder Gierwinkel(s) (p/r/y) zu verdrehen.

12. Laserscanner nach einem der Ansprüche 1 bis 11, **dadurch gekennzeichnet, dass** die Stelleinrichtung (19) dafür ausgebildet ist, den Scanfächer (6) der Scaneinheit (11) durch Verstellen eines Umlenkspiegels der Scaneinheit (11) gegenüber dem Fahrzeug (1) zu verdrehen.

13. Laserscanner nach einem der Ansprüche 1 bis 11, **dadurch gekennzeichnet, dass** die Stelleinrichtung (19) dafür ausgebildet ist, die gesamte Scaneinheit (11) gegenüber dem Fahrzeug (1) zu verdrehen.

14. Laserscanner nach einem der Ansprüche 1 bis 13, **dadurch gekennzeichnet, dass** die Stelleinrichtung (19) eine Steuereinheit (20) und einen von der Steuereinheit (20) gesteuerten Aktuator (21) zum Verdrehen des Scanfächers (6) der Scaneinheit (11) gegenüber dem Fahrzeug (1) umfasst.

15. Laserscanner nach Anspruch 14, **dadurch gekennzeichnet, dass** die Steuereinheit (20) ein Teil der Auswerteeinheit (12) ist.

## Claims

1. Laser scanner for scanning a ground (2) from a seaborne or airborne vehicle (1), comprising
a scanning unit (11) for emitting a scanning fan (6) of laser beams (4) fanned out around a scanning axis (5) and for receiving the laser beams (4) reflected by the ground (2), and
an evaluation unit (12) connected to the scanning unit (11) for evaluating the received laser beams (4),
**characterized by**
a measuring unit (16; 11; 13, 25, 27; 13, 15, 27) which is configured to measure the height (a) of the vehicle (1) above ground (2), and
an adjusting device (19) anchorable on the vehicle (1) and connected to the measuring unit (16; 11; 13, 25, 27; 13, 15, 27),
wherein the adjusting device (19) is configured to pivot the scanning fan (6) of the scanning unit (11) with respect to the vehicle (1) about a first adjusting axis (22) different from the scanning axis (5) in dependence of the measured height (a) above ground (2).

2. Laser scanner according to claim 1, **characterized in that** the first adjusting axis (22) is substantially vertical.

3. Laser scanner according to claim 1 or 2, **characterized in that** the first adjusting axis (22) intersects the scanning axis (5) in the origin (34) of the scanning fan (6).

4. Laser scanner according to any one of the claims 1 to 3, **characterized in that** the measuring unit (16; 11) is configured to measure the height (a) of the vehicle (1) above ground (2) via a time-of-flight measurement of a measurement beam which is emitted, reflected by the ground (2), and received.

5. Laser scanner according to claim 4, **characterized in that** the measurement beam (17) is a radar, laser, or sonar measurement beam.

6. Laser scanner according to claim 4, **characterized in that** the measurement beam is one of the laser beams (4) which are emitted from the scanning unit (11) and reflected by the ground and received, preferably a vertically emitted laser beam (4) .

7. Laser scanner according to any one of the claims 1 to 3, **characterized in that** the measuring unit (13, 25, 27; 13, 15, 27) has a satellite navigation receiver (13) for measuring the three-dimensional position (x/y/z) and is configured to measure the height (a) of the vehicle (1) above ground (2) by means of the position (x/y/z) measured by the satellite navigation receiver (13) and a stored terrain model (3D, 3D') of the ground (2) below the vehicle (1).

8. Laser scanner according to claim 7, **characterized in that** the terrain model (3D') of the ground (2) is predetermined and stored in a memory (25) of the laser scanner (1).

9. Laser scanner according to claim 7, **characterized in that** the evaluation unit (12) is configured to compute said terrain model (3D) of the ground (2) from the direction and time-of-flight of the received laser beams (4) and to store said terrain model (3D) in a memory (15), to which the measuring unit has access.

10. Laser scanner according to any one of the claims 7 to 9, **characterized in that** the adjusting device (19) is further configured to determine, by means of the terrain model (3D, 3D'), a slope (29) of the ground (2) below the measured position (x/y/z) and transverse to a moving direction (23) of the vehicle (1) and to pivot the scanning fan (6) of the scanning unit (11) with respect to the vehicle (1) about a second adjusting axis (31), which lies substantially in the moving direction (23) and differs from the first adjusting axis, in dependence of the determined slope (29).

11. Laser scanner according to any one of the claims 1 to 10, **characterized by** an inertial measurement device (14) for determining at least one of the pitch, roll and yaw angle values (p/r/y), wherein the adjusting device (19) is connected to the inertial measurement device (14) and configured to further pivot the scanning fan (6) for compensating the determined pitch, roll and/or yaw angle(s) (p/r/y).

12. Laser scanner according to any one of the claims 1 to 11, **characterized in that** the adjusting device (19) is configured to pivot the scanning fan (6) of the scanning unit (11) by adjusting a deflection mirror of the scanning unit (11) with respect to the vehicle (1).

13. Laser scanner according to any one of the claims 1 to 11, **characterized in that** the adjusting device (19) is configured to pivot the entire scanning unit (11) with respect to the vehicle (1).

14. Laser scanner according to any one of the claims 1 to 13, **characterized in that** the adjusting device (19) comprises a control unit (20) and an actuator (21) controlled by the control unit (20) for pivoting the scanning fan (6) of the scanning unit (11) with respect to the vehicle (1).

15. Laser scanner according to claim 14, **characterized in that** the control unit (20) is a part of the evaluation unit (12) .

## Revendications

1. Scanner laser destiné à balayer un sol (2) depuis un véhicule marin ou aérien (1), comprenant
une unité de balayage (11) destinée à l'émission d'un éventail de balayage (6) à base de rayons laser (4) se déployant autour d'un axe de balayage (5) et à la réception des rayons laser (4) réfléchis par le sol (2), et
une unité d'exploitation (12) raccordée à l'unité de balayage (11) et destinée à l'exploitation des rayons laser (4) reçus,
**caractérisé par**
une unité de mesure (16 ; 11 ; 13, 25, 27 ; 13, 15, 27), laquelle est conçue pour mesurer la hauteur (a) du véhicule (1) au-dessus du sol (2), et
un dispositif de réglage (19) pouvant s'ancrer sur le véhicule (1), raccordé à l'unité de mesure (16 ; 11 ; 13, 25, 27 ; 13, 15, 27),
dans lequel le dispositif de réglage (19) est conçu pour tourner l'éventail de balayage (6) de l'unité de balayage (11) par rapport au véhicule (1) autour d'un premier axe de réglage (22), différent de l'axe de balayage (5), en fonction de la hauteur (a) au-dessus du sol (2) mesurée.

2. Scanner laser selon la revendication 1, **caractérisé en ce que** le premier axe de réglage (22) est essentiellement vertical.

3. Scanner laser selon la revendication 1 ou 2, **caractérisé en ce que** le premier axe de réglage (22) coupe l'axe de balayage (5) à l'origine (34) de l'éventail de balayage (6).

4. Scanner laser selon l'une des revendications 1 à 3, **caractérisé en ce que** l'unité de mesure (16 ; 11) est conçue pour mesurer la hauteur (a) du véhicule (1) au-dessus du sol (2) par la mesure du temps de parcours d'un rayon de mesure émis, réfléchi par le sol (2) et reçu.

5. Scanner laser selon la revendication 4, **caractérisé en ce que** le rayon de mesure (17) est un rayon radar, laser ou sonar.

6. Scanner laser selon la revendication 4, **caractérisé en ce que** le rayon de mesure est un des rayons laser (4) émis par l'unité de balayage (11) et réfléchis par le sol (2) et reçus, de préférence un rayon laser (4) émis verticalement.

7. Scanner laser selon l'une des revendications 1 à 3, **caractérisé en ce que** l'unité de mesure (13, 25, 27 ; 13, 15, 27) a un récepteur de navigation satellite (13) pour la mesure de la position tridimensionnelle (x/y/z) et est conçue pour mesurer la hauteur (a) du véhicule (1) au-dessus du sol (2) à l'aide de la position (x/y/z) mesurée par le récepteur de navigation satellite (13) et d'un modèle de terrain (3D, 3D') du sol (2) en-dessous du véhicule (1) en mémoire.

8. Scanner laser selon la revendication 7, **caractérisé en ce que** ledit modèle de terrain (3D') du sol (2) est prédéfini et stocké dans une mémoire (25) du scanner laser (1).

9. Scanner laser selon la revendication 7, **caractérisé en ce que** l'unité d'exploitation (12) est conçue pour calculer ledit modèle de terrain (3D) du sol (2) à partir de la direction et du temps de parcours des rayons laser (4) reçus et le stocker dans une mémoire (15) à laquelle l'unité de mesure a accès.

10. Scanner laser selon l'une des revendications 7 à 9, **caractérisé en ce que** le dispositif de réglage (19) est en outre conçu pour déterminer une dénivellation (29) du sol (2) en dessous de la position (x/y/z) mesurée et perpendiculairement par rapport à une direction de déplacement (23) du véhicule (1) à l'aide du modèle de terrain (3D, 3D') et pour tourner l'éventail de balayage (6) de l'unité de balayage (11) par rapport au véhicule (1) autour d'un deuxième axe de réglage (31), différent du premier, se situant essentiellement dans la direction du déplacement (23), en fonction de la dénivellation (29) déterminée.

11. Scanner laser selon l'une des revendications 1 à 10, **caractérisé par** un dispositif de mesure d'inertie (14) pour la détermination d'au moins une des valeurs d'un angle de tangage, d'un angle de roulis et d'un angle de lacet (p/r/y), le dispositif de réglage (19) étant raccordé au dispositif de mesure d'inertie (14) et étant conçu pour tourner en outre l'éventail de balayage (6) pour la compensation de l'angle/des angles de tangage, de roulis et/ou de lacet déterminé(s).

12. Scanner laser selon l'une des revendications 1 à 11, **caractérisé en ce que** le dispositif de réglage (19) est conçu pour tourner l'éventail de balayage (6) de l'unité de balayage (11) par la modification de réglage d'un miroir de déviation de l'unité de balayage (11) par rapport au véhicule (1).

13. Scanner laser selon l'une des revendications 1 à 11, **caractérisé en ce que** le dispositif de réglage (19) est conçu pour tourner l'unité de balayage (11) entière par rapport au véhicule (1).

14. Scanner laser selon l'une des revendications 1 à 13, **caractérisé en ce que** le dispositif de réglage (19) comprend une unité de commande (20) et un actionneur (21) commandé par l'unité de commande (20) pour tourner l'éventail de balayage (6) de l'unité de balayage (11) par rapport au véhicule (1).

15. Scanner laser selon la revendication 14, **caractérisé en ce que** l'unité de commande (20) est une partie de l'unité d'exploitation (12).
